# FASCICULE DE BREVET EUROPEEN

(11) **EP 3 322 052 B1**
(45) Date de publication et mention de la délivrance du brevet: **29.03.2023**
(21) Numéro de dépôt: 17201014.2
(22) Date de dépôt: 10.11.2017
(51) Int. Cl.: H02B 11/133, H01H 9/22, H01H 31/00

(54) **SELECTEUR DE FONCTIONNEMENT D'UN SECTIONNEUR DE MISE A LA TERRE**
BETRIEBSARTENWAHLSCHALTER EINES ERDUNGSWAHLSCHALTERS
SELECTOR OF THE OPERATION OF A GROUNDING SWITCH

(30) Priorité: 14.11.2016 FR 1660981
(43) Date de publication de la demande: 16.05.2018
(73) Titulaire: Schneider Electric Industries SAS, 92500 Rueil-Malmaison (FR)
(72) Inventeur: MELEY, Jean-Pierre, 38050 GRENOBLE Cedex 9 (FR); LAYE, Jérôme, 38050 GRENOBLE Cedex 9 (FR); FRANGIN, Emmanuel, 38050 GRENOBLE Cedex 9 (FR)
(74) Mandataire: Brevalex

(56) Documents cités:
- EP-A1- 1 271 589
- EP-A2- 1 032 006
- WO-A1-2011/023205
- WO-A1-2013/097175
- DE-A1-102011 111 183

## Description

### DOMAINE TECHNIQUE

La présente invention concerne les sectionneurs de mise à la terre utilisés dans des cellules haute tension, et plus particulièrement leur contrôle. Le terme "sectionneur" couvre ici aussi les interrupteurs et les interrupteurs/sectionneurs. Le terme "haute tension" couvre ici les domaines de la moyenne tension et de la haute tension, à savoir une tension supérieure à 1000 V.

Dans ce cadre, l'invention est relative à un sélecteur motorisé de mode de fonctionnement destiné à un sectionneur de mise à la terre.

L'invention s'applique en particulier aux cellules à isolement dans l'air c'est-à-dire de type AIS (d'après l'Anglais : Air Insulated Switchgear). Elle s'applique également à des cellules à isolement dans le gaz, c'est-à-dire de type GIS (d'après l'Anglais : Gaz Insulated Switchgear).

### ÉTAT DE LA TECHNIQUE ANTÉRIEURE

D'une façon générale, une telle cellule haute tension comporte un appareil électrique débrochable qui est mobile sur un chariot pour pouvoir être connecté ou déconnecté de la cellule haute tension. Le chariot peut être motorisé. L'appareil électrique est généralement un disjoncteur, mais peut être aussi un contacteur, un contacteur/disjoncteur ou un contacteur/fusibles.

Un sectionneur de mise à la terre est un organe de sécurité utilisé dans les cellules haute tension pour réaliser des interventions de maintenance à l'intérieur des cellules ou sur les câbles qui y sont raccordés. Il comporte un système de contrôle qui agit sur des contacts de puissance qui assurent la mise à la terre des câbles lorsqu'ils sont fermés. La manoeuvre d'un sectionneur ne peut être réalisée que sous certaines conditions et le système de contrôle intègre des verrouillages avec des organes situés à proximité ou à distance, tels que le disjoncteur débrochable de la cellule, une porte donnant accès aux câbles, des appareils amont ou avals. Le sectionneur de mise à la terre est traditionnellement manoeuvré manuellement par l'opérateur en face avant de la cellule et à l'aide d'une manivelle. Les verrouillages sont essentiellement mécaniques et assurés par des liaisons physiques telles que des bielles en translation ou en rotation et par des clés. De plus, l'utilisation de cadenas permet de consigner le sectionneur dans un état donné, ouvert ou fermé, et d'assurer la sécurité de l'intervenant.

Dans la plupart des modes de réalisation actuels, le système de contrôle comprend un sélecteur rotatif ou linéaire à plusieurs positions. Le déplacement du sélecteur est possible sous certaines conditions de verrouillage mécanique. Le déplacement du sélecteur autorise l'introduction de la manivelle nécessaire à la manoeuvre du sectionneur et assure par lui-même certains verrouillages mécaniques. La consignation est assurée en général par le cadenassage du sélecteur.

Il devient de plus en plus courant de motoriser les sectionneurs de mise à la terre afin de permettre une commande à distance et d'éloigner l'opérateur de la cellule. Ainsi l'opérateur n'est pas exposé à un éventuel arc interne qui pourrait se produire à l'intérieur de la cellule lors de la fermeture des contacts de puissance.

Dans l'état de l'art actuel, la motorisation est réalisée par l'ajout, sur un sectionneur manuel, d'un moteur et d'un système de verrouillage électrique. Par exemple dans la chaîne de commande du moteur du sectionneur, il est prévu d'ajouter un contact auxiliaire de position du disjoncteur qui interdit le fonctionnement du moteur lorsque le disjoncteur est embroché (c'est-à-dire connecté).

La superposition d'une marche manuelle et d'une marche motorisée introduit cependant une complexité de fonctionnement liée aux interactions entre ces deux marches. En particulier dans les réalisations existantes, les fonctions suivantes ne sont pas prises en compte ou alors seulement de manière partielle :
- En marche motorisée, maintenir l'ensemble des verrouillages mécaniques initiaux en sus des verrouillages électriques.
- Assurer le verrouillage entre les marches motorisée et manuelle (interdire un accès manuel en marche motorisée et réciproquement).
- En situation de consignation, assurer le verrouillage mécanique du moteur afin de garantir le non fonctionnement du sectionneur en cas d'ordre électrique distant et de défaillance du système de verrouillage électrique (contacts auxiliaires soudés par exemple).

WO 2011/023205 concerne un dispositif d'entraînement pour un appareil de commutation à plusieurs positions, par exemple pour un sectionneur et interrupteur de mise à la terre, dont la pièce de contact mobile peut être déplacée entre trois positions différentes : contact, coupure et mise à la terre, avec retour.

### EXPOSÉ DE L'INVENTION

L'invention vise à résoudre les problèmes de la technique antérieure en fournissant un système de contrôle d'un sectionneur de mise à la terre motorisé dans différents modes de fonctionnement, appelé sélecteur de mode de fonctionnement, qui permet d'assurer l'ensemble des verrouillages mécaniques et électriques ainsi que la prise en compte des interactions dans les différents modes de fonctionnement, et la consignation avec un verrouillage mécanique du moteur.

Ainsi, l'invention concerne un sélecteur de mode de fonctionnement d'un sectionneur de mise à la terre,tel que défini dans la revendication 1.

L'invention résout les problèmes d'interactions entre les modes de fonctionnement manuel et automatique d'un sectionneur de mise à la terre motorisé.

L'invention permet d'augmenter la sécurité des biens et des personnes, en mettant en place des sécurités mécaniques en plus des sécurités électriques.

En particulier, elle prend en compte les modes de défaillance tels que :
- la soudure des contacts de puissance du sectionneur de mise à la terre suite à un passage de courant excessif ou la rupture de l'arbre de commande qui pourraient conduire à la non ouverture du sectionneur de mise à la terre,
- la soudure des contacts auxiliaires du circuit de commande du moteur, qui pourrait conduire à une ouverture intempestive du sectionneur de mise à la terre.

Selon une caractéristique préférée, le sélecteur de mode de fonctionnement d'un sectionneur de mise à la terre comporte en outre une deuxième came qui entraine le deuxième organe de verrouillage pour bloquer mécaniquement le chariot de l'appareil électrique en position débrochée, lorsque le sélecteur est dans une position de la pluralité de positions correspondant au mode manuel.

Selon une caractéristique préférée, le sélecteur de mode de fonctionnement d'un sectionneur de mise à la terre, comportant un arbre de retour d'information de la position réelle des contacts de puissance du sectionneur, comporte en outre un deuxième levier, de sorte que l'arbre de retour d'information maintient, via le deuxième levier, le deuxième organe de verrouillage qui bloque mécaniquement le chariot de l'appareil électrique en position débrochée, tant que les contacts de puissance du sectionneur de mise à la terre sont en position fermée.

Selon une caractéristique préférée, le sélecteur de mode de fonctionnement d'un sectionneur de mise à la terre comporte une troisième came agissant sur des contacts électriques auxiliaires de façon à établir l'alimentation du moteur en mode automatique et à couper l'alimentation du moteur dans les autres modes.

Selon une caractéristique préférée, dans le mode verrouillé ouvert, le deuxième organe de verrouillage autorise le déplacement du chariot de l'appareil électrique.

Selon une caractéristique préférée, le sélecteur de mode de fonctionnement d'un sectionneur de mise à la terre comporte une quatrième came agissant sur un troisième organe de verrouillage pour déverrouiller une porte d'accès aux câbles en mode verrouillé fermé et pour verrouiller la porte d'accès aux câbles, sinon.

Selon une caractéristique préférée, le sélecteur de mode de fonctionnement d'un sectionneur de mise à la terre comporte une tige qui bloque le sélecteur en mode verrouillé fermé tant que la porte d'accès aux câbles n'est pas fermée.

Selon une caractéristique préférée, le sélecteur de mode de fonctionnement d'un sectionneur de mise à la terre comporte une cinquième came et un arbre de retour d'information de la position des contacts de puissance, pour interdire l'accès au mode verrouillé ouvert et au mode verrouillé fermé, si la position correspondante des contacts de puissance du sectionneur n'est pas atteinte.

Selon une caractéristique préférée, le sélecteur de mode de fonctionnement d'un sectionneur de mise à la terre comporte un système de blocage par clé ou par cadenas ou par bobine, dans les modes verrouillé fermé et verrouillé ouvert du sectionneur de mise à la terre.

L'invention concerne aussi un sectionneur de mise à la terre caractérisé en ce qu'il comporte un sélecteur de mode de fonctionnement tel que précédemment présenté.

Le sectionneur de mise à la terre présente des avantages analogues à ceux précédemment présentés.

### BRÈVE DESCRIPTION DES DESSINS

D'autres caractéristiques et avantages apparaîtront à la lecture de la description suivante d'un mode de réalisation préféré, donné à titre d'exemple non limitatif, décrit en référence aux figures dans lesquelles :
La figure 1 représente un sectionneur de mise à la terre, équipé d'un sélecteur de mode de fonctionnement, selon un mode de réalisation de la présente invention,
Les figures 2a, 2b, 2c, 2d représentent des vues en perspective d'éléments du sélecteur de mode de fonctionnement, relatives aux chaînes cinématiques de puissance et de contrôle du sectionneur de mise à la terre, selon un mode de réalisation de la présente invention,
La figure 3 représente une autre vue en perspective d'éléments du sélecteur de mode de fonctionnement utiles pour la mise en oeuvre du mode verrouillé fermé, selon un mode de réalisation de la présente invention,
La figure 4 représente une autre vue en perspective d'éléments du sélecteur de mode de fonctionnement, relative au système d'inter-verrouillage entre le sectionneur et le disjoncteur, selon un mode de réalisation de la présente invention,
La figure 5 représente une autre vue en perspective d'éléments du sélecteur de mode de fonctionnement, utiles en cas de défaillance des contacts de puissance ou de l'arbre de commande, selon un mode de réalisation de la présente invention,
Les figures 6a et 6b représentent d'autres vues en perspective d'éléments du sélecteur de mode de fonctionnement, relatives au système d'inter-verrouillage entre le sectionneur et une porte d'accès aux câbles haute tension de la cellule, selon un mode de réalisation de la présente invention,
Les figures 7a, 7b et 7c représentent d'autres vues en perspective d'éléments du sélecteur de mode de fonctionnement, relatives aux modes de consignation, selon un mode de réalisation de la présente invention.

### EXPOSÉ DÉTAILLÉ DE MODES DE RÉALISATION PARTICULIERS

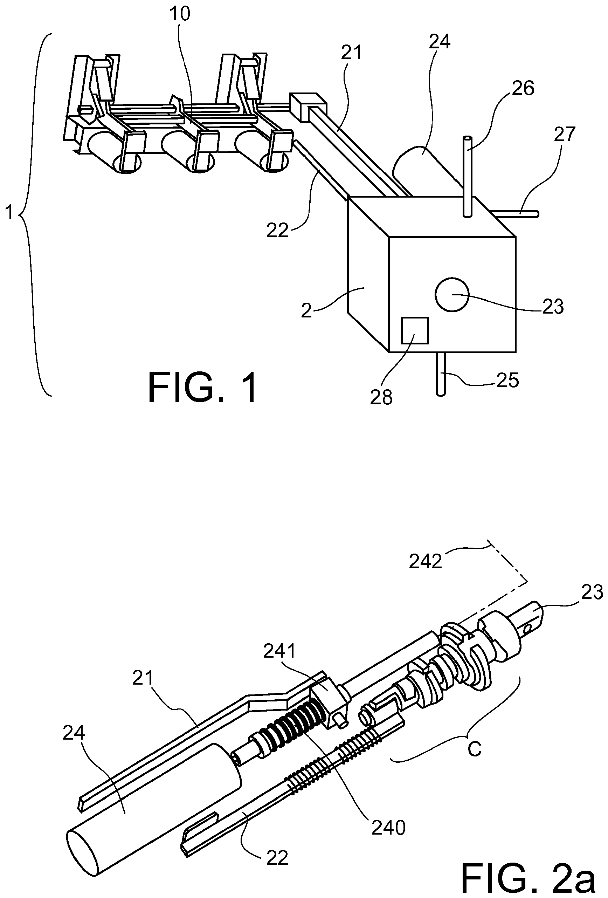

Selon un mode de réalisation préféré, représenté à la **figure 1****,** un sectionneur 1 de mise à la terre est équipé d'un sélecteur de mode de fonctionnement 2. Le sectionneur 1 est destiné à équiper une cellule haute tension classique en soi et non représentée. La cellule haute tension comporte notamment un appareil électrique débrochable de type disjoncteur, monté sur un chariot et un compartiment dans lequel sont logés des câbles haute tension.

Le sectionneur 1 comporte des contacts principaux de puissance 10 situés dans le compartiment décrit précédemment et dont la fermeture assure la mise à la terre des câbles haute tension. Ainsi, en position dite fermée les contacts de puissance 10 connectent les câbles haute tension à la terre, alors qu'en position dite ouverte les câbles haute tension sont déconnectés de la terre. Le sectionneur est de type motorisé et comporte un moteur 24.

Le sélecteur 2 commande la manoeuvre des contacts de puissance 10 via un arbre de commande 21. Un arbre de retour 22 lié aux contacts de puissance 10 et libre de contrainte mécanique, transmet la position exacte des contacts de puissance 10 du sectionneur au sélecteur 2. Un indicateur de position 28 situé en face avant du sélecteur 2 permet de visualiser cette position.

Un bouton de commande 23 est disposé sur le sélecteur 2. Le bouton de commande est par exemple rotatif et selon sa position, il définit un mode de fonctionnement du sectionneur de mise à la terre. Ainsi, comme détaillé dans la suite, il autorise l'introduction d'une manivelle en face avant ou le fonctionnement du moteur 24.

Le compartiment des câbles comporte une porte d'accès. Le sélecteur 2 comporte un organe 25 de verrouillage de porte pour empêcher son ouverture.

Le sélecteur 2 comporte également un organe 26 de verrouillage du chariot du disjoncteur débrochable et un organe 27 de verrouillage du moteur 24 du sectionneur de mise à la terre.

Il est à noter que certains éléments sont représentés de manière schématique à la figure 1, notamment les organes 25, 26 et 27. Les figures suivantes les représentent de manière plus réaliste.

Le sélecteur 2 comporte quatre positions correspondant à quatre modes de fonctionnement du sectionneur de mise à la terre 1 :
- Mode automatique, qui permet la manoeuvre du sectionneur de mise à la terre à l'aide du moteur. C'est le mode de fonctionnement normal du sectionneur de mise à la terre ;
- Mode manuel, qui permet la manoeuvre du sectionneur de mise à la terre à l'aide d'une manivelle par un opérateur ;
- Modes verrouillé ouvert et verrouillé fermé qui permettent de verrouiller respectivement les positions ouverte et fermée du sectionneur de mise à la terre.

Les modes de fonctionnement sont définis par la position du bouton de commande 23.

En variante, le bouton rotatif quatre positions 23 est remplacé par un bouton à trois positions permettant de choisir entre des positions "verrouillé fermé", "verrouillé ouvert" et "en opération", associé par exemple à un volet de commande permettant de choisir entre les modes de fonctionnement "manuel" et "automatique" lorsque le bouton à trois positions est en position "en opération".

Les fonctionnalités du sectionneur de mise à la terre sont maintenant détaillées.

Dans le mode automatique, le sectionneur de mise à la terre 1 est manoeuvré électriquement, autorisant ainsi la commande à distance. Toute manoeuvre manuelle du sectionneur par un opérateur est impossible. En outre, l'ouverture de la porte du compartiment des câbles haute tension est impossible.

Dans le mode manuel, le moteur du sectionneur de mise à la terre 1 est désactivé, l'introduction de la manivelle est possible autorisant la manoeuvre manuelle par l'operateur. En outre, l'ouverture de la porte du compartiment des câbles haute tension est impossible. Le chariot du disjoncteur est verrouillé en position débrochée. Le mode manuel n'est accessible que si le chariot du disjoncteur est en position débrochée.

Dans le mode verrouillé fermé qui autorise l'intervention humaine sur les câbles haute tension, le moteur du sectionneur de mise à la terre 1 est désactivé électriquement et verrouillé mécaniquement. La manoeuvre manuelle du sectionneur par un opérateur est impossible. L'ouverture de la porte du compartiment des câbles haute tension est possible. Le chariot du disjoncteur est verrouillé en position débrochée. Le sélecteur 2 est consignable par une clé ou un cadenas en face avant du boîtier de commande ou électriquement par une bobine. Ce mode n'est accessible que si le chariot du disjoncteur est en position débrochée et si la position fermée des contacts de puissance 10 est réellement atteinte. En particulier, si l'arbre de commande 21 est rompu suite à une sollicitation mécanique trop forte, le mode verrouillé fermé ne sera pas accessible.

Dans le mode verrouillé ouvert, le moteur du sectionneur de mise à la terre 1 est désactivé électriquement mais n'est pas verrouillé mécaniquement. La manoeuvre manuelle du sectionneur par un opérateur est impossible. L'ouverture de la porte du compartiment des câbles haute tension est impossible. Le déplacement du chariot du disjoncteur est possible. Le sélecteur 2 est consignable par une clé ou un cadenas en face avant du boîtier de commande ou électriquement par une bobine. Ce mode n'est accessible que si la position ouverte des contacts de puissance 10 est réellement atteinte. En particulier, si les contacts de puissance 10 sont soudés suite à un passage de courant excessif, le mode verrouillé ouvert ne sera pas accessible.

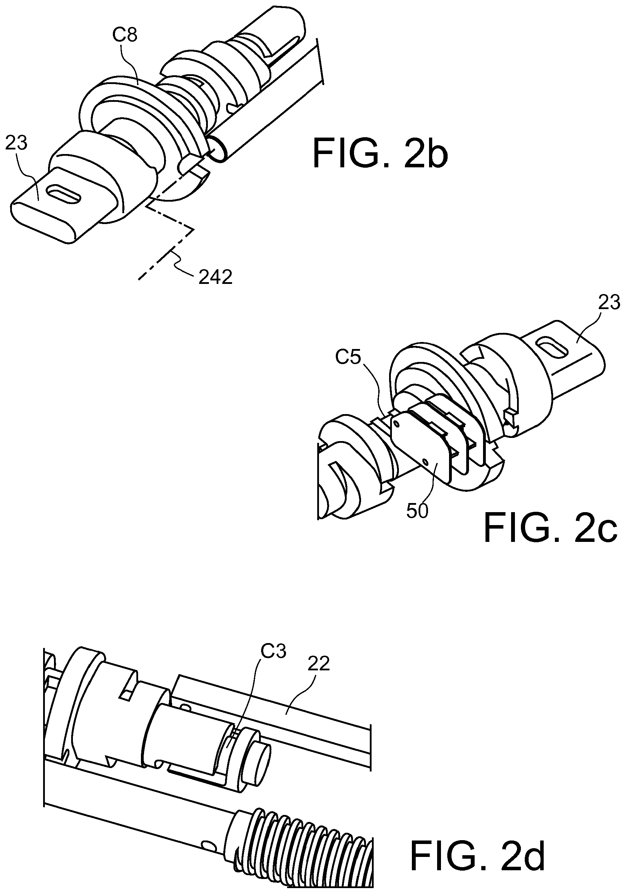

Les **figures 2a****,** **2b, 2c et 2d** représentent des vues en perspective de certains éléments du sélecteur 2 de mode de fonctionnement du sectionneur de mise à la terre 1, selon un mode de réalisation de l'invention. Ces figures illustrent plus particulièrement les chaînes cinématiques de puissance et de contrôle du sectionneur de mise à la terre.

Le bouton 23 du sélecteur entraine en rotation un système de cames C dont le rôle sera exposé dans la suite.

Une vis sans fin 240 est entraînée en rotation par le moteur 24 du sectionneur 1 ou par une manivelle 242 situés chacun à une des extrémités de la vis sans fin. Un écrou 241 se déplace en translation sur la vis sans fin lorsqu'elle est entraînée en rotation.

L'écrou 241 est relié à l'arbre de commande 21 de sorte que l'arbre de commande 21 se déplace en translation lorsque l'écrou 241 se déplace sur la vis sans fin 240. Cela provoque le mouvement des contacts de puissance 10 du sectionneur de mise à la terre 1.

En mode manuel, une came C8 du système de cames C (fig 2b) permet l'introduction de la manivelle 242 dans un logement de la vis sans fin 240 et une came C5 agit sur des contacts électriques auxiliaires 50 (fig 2c) qui coupent le circuit d'alimentation du moteur 24.

En mode automatique, la came C8 interdit l'accès à la manivelle 242 et la came C5 rétablit l'alimentation du circuit d'alimentation du moteur 24.

En mode verrouillé ouvert, l'organe de verrouillage 26 autorise le déplacement du chariot de l'appareil électrique et la came C5 agit sur les contacts électriques auxiliaires 50 pour couper l'alimentation du moteur.

L'arbre de retour 22 est fixé aux contacts de puissance 10 et est mobile en translation pour transmettre la position réelle des contacts de puissance 10 du sectionneur 1 jusqu'au sélecteur 2. Il interagit avec le bouton 23 par le biais d'une came C3 (fig 2d) qui interdit l'accès aux modes verrouillé fermé et verrouillé ouvert si la position correspondante n'est pas atteinte par les contacts de puissance 10 du sectionneur. Par exemple, si les contacts de puissance 10 sont soudés, le mode verrouillé ouvert ne sera pas accessible.

Dans le mode de réalisation préféré, la vis sans fin 240, l'arbre de commande 21 et l'arbre de retour 22 sont parallèles.

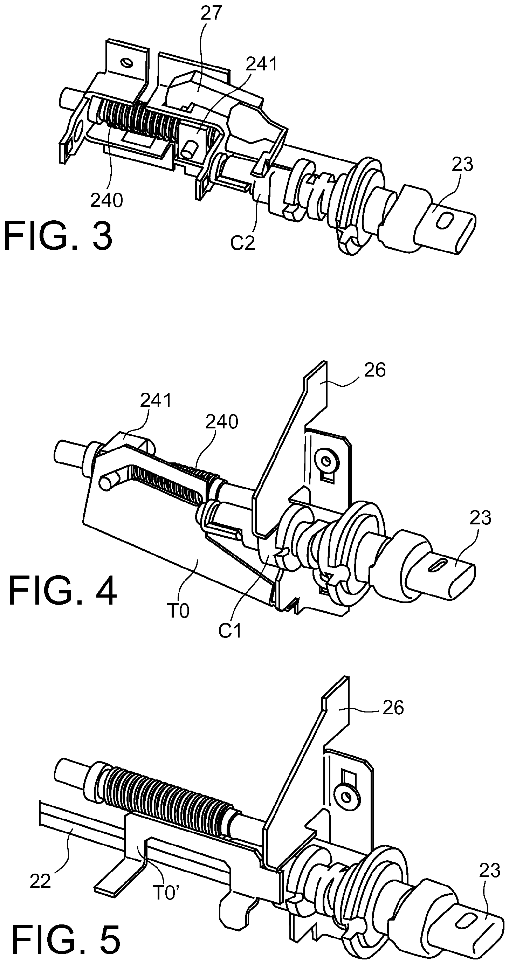

La **figure 3** représente une autre vue en perspective d'éléments du sélecteur de mode de fonctionnement, utiles pour la mise en oeuvre du mode verrouillé fermé.

Le système de cames C comporte notamment une came C2. Lorsque le bouton 23 est en position « verrouillé fermé », la came C2 entraine un organe de verrouillage 27 qui est un verrou rotatif pivotant autour d'un axe. Une extrémité de l'organe de verrouillage 27 vient alors bloquer mécaniquement l'écrou 241 qui ne peut plus se déplacer sur la vis sans fin 240. Le moteur du sectionneur de mise à la terre 1 est alors bloqué mécaniquement.

Ainsi, quand le mode verrouillé fermé est sélectionné via le bouton 23, par exemple avant d'effectuer une intervention humaine sur les câbles haute tension, le sectionneur de mise à la terre 1 reste bien fermé, et ceci même dans le cas où la commande électrique du sectionneur de mise à la terre serait court-circuitée. Un tel cas peut se produire si les contacts auxiliaires 50 sont soudés en raison du passage d'un courant trop élevé. En effet, sans le verrouillage mécanique de la came C2, le démarrage du moteur électrique serait alors possible en cas d'ordre d'ouverture distant du sectionneur de mise à la terre, ce qui mettrait en danger un opérateur en intervention sur les câbles haute tension. Grâce à l'invention, le moteur est bloqué mécaniquement par la came C2, le sectionneur de mise à la terre reste fermé et la sécurité du personnel en intervention est maintenue.

La **figure 4** représente une autre vue en perspective d'éléments du sélecteur de mode de fonctionnement, utiles pour la mise en oeuvre du mode automatique et du mode manuel, en particulier pour les verrouillages mécaniques entre le sectionneur de mise à la terre et le chariot du disjoncteur.

Pour fermer le sectionneur de mise à la terre, le chariot du disjoncteur doit être préalablement débroché, puis maintenu verrouillé dans cette position tant que le sectionneur est fermé. Inversement pour embrocher le chariot du disjoncteur, le sectionneur doit être préalablement ouvert, puis maintenu verrouillé dans cette position tant que le chariot du disjoncteur ne retrouve pas la position débrochée.

Comme mentionné plus haut, Le moteur 24 est apte à entraîner en rotation la vis sans fin 240 sur laquelle se déplace en translation l'écrou 241 lorsque la vis sans fin est entraînée par le moteur. Cela provoque le mouvement des contacts de puissance 10 du sectionneur de mise à la terre 1.

Un premier levier T0 est entraîné par l'écrou 241, de sorte que le levier T0 agit sur l'organe de verrouillage 26 qui est une tige mobile en translation. La tige 26 bloque mécaniquement le chariot (non représenté) du disjoncteur en position débrochée lorsque l'écrou 241 se déplace vers la position de fermeture du sectionneur.

Ainsi, en mode automatique, la fermeture du sectionneur de mise à la terre 1 assure le blocage mécanique du chariot du disjoncteur, interdisant ainsi la manoeuvre manuelle du chariot du disjoncteur et l'embrochage du disjoncteur. Sans le premier levier T0, un opérateur pourrait embrocher manuellement le chariot du disjoncteur suite à une fermeture électrique à distance du sectionneur de mise à la terre. Grâce à l'invention, cette situation ne peut pas se produire.

Lorsque le bouton 23 est dans la position du mode manuel, une deuxième came C1 du sélecteur entraine directement la tige 26 qui bloque mécaniquement le chariot du disjoncteur en position débrochée. L'embrochage manuel du chariot du disjoncteur est ainsi interdit.

Inversement, si le chariot du disjoncteur est en position embroché, la tige 26 est bloquée en position basse par le chariot. La came C1 est à son tour bloquée, interdisant le passage du bouton 23 en mode manuel. La came C8 interdit l'introduction de la manivelle dans son logement. La fermeture manuelle du sectionneur est alors impossible.

La **figure 5** représente une autre vue en perspective d'éléments du sélecteur de mode de fonctionnement, utiles en cas de défaillance des contacts de puissance 10.

L'arbre de retour d'information 22 a une position longitudinale qui indique la position réelle des contacts de puissance 10 du sectionneur de mise à la terre. L'arbre de retour d'information 22 indique notamment si les contacts de puissance 10 du sectionneur de mise à la terre 1 sont fermés.

Si les contacts de puissance 10 du sectionneur de mise à la terre restent soudés en position fermeture, par exemple en raison d'un passage de courant excessif lors de multiples fermetures sur défaut, et si un ordre d'ouverture du sectionneur de mise à la terre est transmis, l'arbre de retour d'information 22 garde sa position et maintient un deuxième levier T0' contre la tige 26. Ainsi, le deuxième levier maintient la tige 26 dans une position de blocage mécanique du chariot du disjoncteur (position débrochée). Grâce à l'invention, l'embrochage manuel du chariot du disjoncteur est alors impossible.

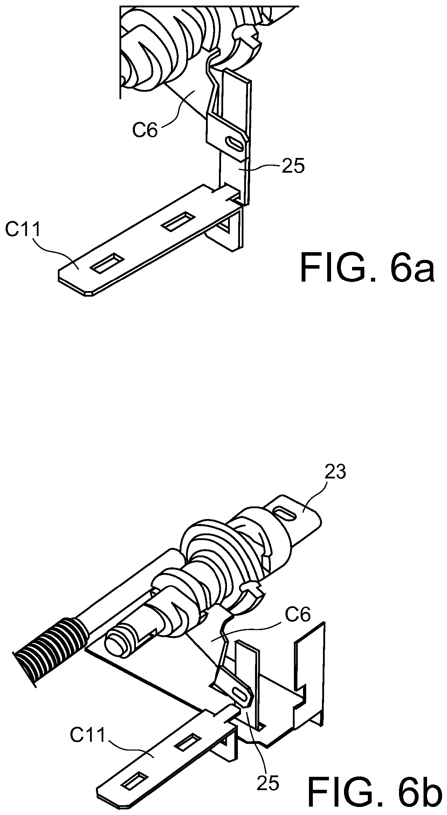

Les **figures 6a et 6b** représentent d'autres vues en perspective d'éléments du sélecteur de mode de fonctionnement, utiles pour le verrouillage de la porte d'accès au compartiment dans lequel sont logés les câbles haute tension de la cellule.

Le système de came C comporte une came C6 qui agit sur l'organe de verrouillage 25. Dans le mode de réalisation présenté, l'organe de verrouillage 25 est une tige dont le déplacement, ici vertical, permet le verrouillage de la porte d'accès aux câbles haute tension, située en dessous du sectionneur dans l'exemple décrit.

La porte est verrouillée dans tous les modes sauf dans le mode "verrouillé fermé" du sectionneur. Dans ce mode, une intervention humaine sur les câbles haute tension est autorisée. Dans ce cas, l'ouverture de la porte libère une tige C11 montée sur ressort et qui vient bloquer la tige 25 dans sa position haute. Le bouton 23 est alors bloqué en position "verrouillé fermé" du sectionneur, interdisant l'ouverture du sectionneur tant que la porte d'accès aux câbles n'est pas refermée.

Inversement, la fermeture de la porte déplace la tige C11 et libère la tige 25 puis la came C6, permettant la rotation du bouton 23 et le passage en "mode manuel" ou en "mode automatique" pour ouvrir le sectionneur de mise à la terre.

Il existe un cas particulier d'intervention sur les câbles où il est nécessaire d'ouvrir le sectionneur de mise à la terre pour injecter une tension d'essai sur les câbles, alors que la porte est ouverte. Dans ce cas précis, il est possible d'agir à la main sur la tige C11 pour simuler la fermeture de la porte, libérer la tige 25 et la came C6, puis passer en mode manuel ou automatique et ouvrir le sectionneur de mise à la terre. A l'issu de l'essai, le sectionneur est fermé, et les conditions initiales sont retrouvées.

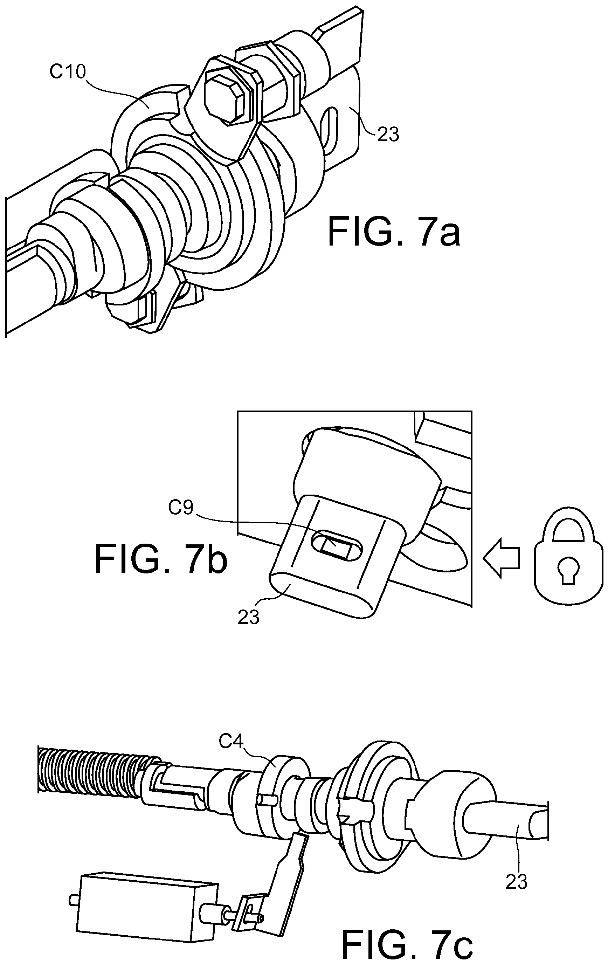

Les **figures 7a, 7b et 7c** représentent d'autres vues en perspective d'éléments du sélecteur de mode de fonctionnement, utiles pour la consignation du sectionneur de mise à la terre.

Le système de cames C comporte une came C10 qui interagit avec des serrures à clé, interdisant la rotation du bouton 23 lorsqu'il est dans les positions "verrouillé ouvert" et "verrouillé fermé", permettant ainsi de consigner le sectionneur de mise à la terre ou de l'interverrouiller avec un appareil amont ou aval.

D'une manière similaire, le système de cames C comporte une came C9 qui interagit avec un cadenas, interdisant la rotation du bouton 23 lorsqu'il est dans les positions "verrouillé ouvert" et "verrouillé fermé", permettant ainsi de consigner le sectionneur de mise à la terre.

D'une manière similaire, le système de cames C comporte une came C4 qui interagit avec une bobine électrique, interdisant la rotation du bouton 23 lorsqu'il est dans les positions "verrouillé ouvert" et "verrouillé fermé", permettant ainsi de consigner le sectionneur de mise à la terre.

## Revendications

1. Sélecteur (2) de mode de fonctionnement d'un sectionneur de mise à la terre (1), le sectionneur de mise à la terre comportant des contacts de puissance (10) et un moteur (24) pour manoeuvrer les contacts de puissance (10),
le sélecteur comportant un bouton apte à prendre une pluralité de positions correspondant respectivement à différents modes de fonctionnement du sectionneur de mise à la terre,
**caractérisé en ce qu'**il comporte :
des cames entraînées en rotation par le bouton du sélecteur, les mode de fonctionnement du sectionneur de mise à la terre comportant un mode automatique dans lequel la manoeuvre du sectionneur de mise à la terre est effectuée à l'aide du moteur, un mode manuel dans lequel la manoeuvre du sectionneur de mise à la terre est effectuée par un opérateur et des modes verrouillé ouvert et verrouillé fermé dans lesquelles sont verrouillées respectivement les positions ouverte et fermée du sectionneur de mise à la terre,
une première came (C2) qui entraine un premier organe rotatif de verrouillage (27) destiné à bloquer mécaniquement le moteur du sectionneur de mise à la terre lorsque le bouton du sélecteur est dans une position de la pluralité de positions correspondant au mode verrouillé fermé,
une vis sans fin (240) entraînée en rotation par le moteur (24) et un écrou (241) entraîné par la vis sans fin lorsque le moteur entraîne la vis sans fin, l'écrou étant lié à un arbre de commande (21) pour provoquer le mouvement des contacts de puissance du sectionneur, le sectionneur étant installé dans une cellule comportant un appareil électrique débrochable monté sur un chariot, et
un premier levier (T0) entraîné par l'écrou de la vis sans fin, de sorte que le premier levier agit sur un deuxième organe de verrouillage (26) pour qu'il bloque mécaniquement le chariot de l'appareil électrique en position débrochée lorsque l'écrou se déplace vers la position de fermeture du sectionneur, lorsque le sélecteur est dans une position de la pluralité de positions correspondant au mode automatique.

2. Sélecteur de mode de fonctionnement d'un sectionneur de mise à la terre selon la revendication 1,
**caractérisé en ce qu'**il comporte en outre une deuxième came (C1) qui entraine le deuxième organe de verrouillage (26) pour bloquer mécaniquement le chariot de l'appareil électrique en position débrochée, lorsque le sélecteur est dans une position de la pluralité de positions correspondant au mode manuel.

3. Sélecteur de mode de fonctionnement d'un sectionneur de mise à la terre selon la revendication 1 ou 2, comportant un arbre (22) de retour d'information de la position réelle des contacts de puissance du sectionneur,
**caractérisé en ce qu'**il comporte en outre un deuxième levier (Ta'), de sorte que l'arbre de retour d'information maintient, via le deuxième levier, le deuxième organe de verrouillage (26) qui bloque mécaniquement le chariot de l'appareil électrique en position débrochée, tant que les contacts de puissance (10) du sectionneur de mise à la terre sont en position fermée.

4. Sélecteur de mode de fonctionnement d'un sectionneur de mise à la terre selon l'une quelconque des revendications 1 à 3,
**caractérisé en ce que** le sélecteur comporte une troisième came (C5) agissant sur des contacts électriques auxiliaires (50) de façon à établir l'alimentation du moteur en mode automatique et à couper l'alimentation du moteur dans les autres modes.

5. Sélecteur de mode de fonctionnement d'un sectionneur de mise à la terre selon la revendication 4,
**caractérisé en ce que**, dans le mode verrouillé ouvert, le deuxième organe de verrouillage (26) autorise le déplacement du chariot de l'appareil électrique.

6. Sélecteur de mode de fonctionnement d'un sectionneur de mise à la terre selon l'une quelconque des revendications 1 à 5,
**caractérisé en ce que** le sélecteur comporte une quatrième came (C6) agissant sur un troisième organe de verrouillage (25) pour déverrouiller une porte d'accès aux câbles en mode verrouillé fermé et pour verrouiller la porte d'accès aux câbles, sinon.

7. Sélecteur de mode de fonctionnement d'un sectionneur de mise à la terre selon la revendication 6,
**caractérisé en ce qu'**il comporte une tige (C11) qui bloque le sélecteur en mode verrouillé fermé tant que la porte d'accès aux câbles n'est pas fermée.

8. Sélecteur de mode de fonctionnement d'un sectionneur de mise à la terre selon l'une quelconque des revendications 1 à 7,
**caractérisé en ce que** le sélecteur comporte une cinquième came (C3) et un arbre (22) de retour d'information de la position des contacts de puissance (10), pour interdire l'accès au mode verrouillé ouvert et au mode verrouillé fermé si la position correspondante des contacts de puissance (10) du sectionneur n'est pas atteinte.

9. Sélecteur de mode de fonctionnement d'un sectionneur de mise à la terre selon l'une quelconque des revendications 1 à 8, **caractérisé en ce que** le sélecteur comporte un système de blocage par clé (C10) ou par cadenas (C9) ou par bobine (C4), dans les modes verrouillé fermé et verrouillé ouvert du sectionneur de mise à la terre.

10. Sectionneur de mise à la terre **caractérisé en ce qu'**il comporte un sélecteur de mode de fonctionnement selon l'une quelconque des revendications 1 à 9.

## Patentansprüche

1. Wahlschalter (2) des Betriebsmodus eines Erdungstrennschalters (1), wobei der Erdungstrennschalter Leistungskontakte (10) beinhaltet und einen Motor (24) zum Bedienen der Leistungskontakte (10),
wobei der Wahlschalter einen Wählknopf beinhaltet, der imstande ist, eine Vielzahl von Positionen einzunehmen, die jeweils verschiedenen Betriebsmodi des Erdungstrennschalters entsprechen,
**dadurch gekennzeichnet, dass** er beinhaltet:
Nocken, die durch den Wählknopf des Wahlschalters in Drehung versetzt werden, wobei die Betriebsmodi des Erdungstrennschalters einen Automatikmodus beinhalten, in dem die Betätigung des Erdungstrennschalters unter Verwendung des Motors durchgeführt wird, einen Manualmodus, in dem die Betätigung des Erdungstrennschalters durch einen Bediener durchgeführt wird, und offene und geschlossene Verriegelungsmodi, in denen die offene und geschlossene Position des Erdungstrennschalters jeweils verriegelt ist,
eine erste Nocke (C2), die ein erstes drehbares Verriegelungselement (27) antreibt, das dazu bestimmt ist, den Motor des Erdungstrennschalters mechanisch zu blockieren, wenn der Wählknopf des Wahlschalters in einer Position der Vielzahl von Positionen ist, die dem geschlossenen Verriegelungsmodus entspricht,
eine Endlosschraube (240), die durch den Motor (24) in Drehung versetzt wird, und eine von der Endlosschraube angetriebene Mutter (241), wenn der Motor die Endlosschraube antreibt, wobei die Mutter mit einer Steuerwelle (21) verbunden ist, um die Bewegung der Leistungskontakte des Trennschalters zu bewirken, wobei der Trennschalter in einer Zelle installiert ist, die ein abnehmbares elektrisches Gerät beinhaltet, das auf einem Schlitten montiert ist, und
einen ersten Hebel (T0), der von der Mutter der Endlosschraube angetrieben wird, so dass der erste Hebel auf ein zweites Verriegelungselement (26) wirkt, so dass es den Schlitten des elektrischen Geräts in der abgenommenen Position mechanisch blockiert, wenn sich die Mutter in Richtung der Schließposition des Trennschalters bewegt, wenn sich der Wahlschalter in einer Position der Vielzahl von Positionen befindet, die dem Automatikmodus entspricht.

2. Wahlschalter des Betriebsmodus eines Erdungstrennschalters nach Anspruch 1, **dadurch gekennzeichnet, dass** er ferner eine zweite Nocke (C1) beinhaltet, die das zweite Verriegelungselement (26) antreibt, um den Schlitten des elektrischen Geräts in der abgenommenen Position mechanisch zu blockieren, wenn sich der Wahlschalter in einer Position der Vielzahl von Positionen befindet, die dem Manualmodus entspricht.

3. Wahlschalter des Betriebsmodus eines Erdungstrennschalters nach Anspruch 1 oder 2, eine Welle (22) zur Rückmeldung der tatsächlichen Position der Leistungskontakte des Trennschalters beinhaltend,
**dadurch gekennzeichnet, dass** er ferner einen zweiten Hebel (T0') beinhaltet, so dass die Welle zur Rückmeldung über den zweiten Hebel das zweite Verriegelungselement (26) hält, das den Schlitten des elektrischen Geräts in der abgenommenen Position mechanisch blockiert, solange sich die Leistungskontakte (10) des Erdungstrennschalters in der geschlossenen Position befinden.

4. Wahlschalter des Betriebsmodus eines Erdungstrennschalters nach einem der Ansprüche 1 bis 3,
**dadurch gekennzeichnet, dass** der Wahlschalter eine dritte Nocke (C5) beinhaltet, die auf elektrische Hilfskontakte (50) wirkt, auf die Weise, dass die Versorgung des Motors im Automatikmodus hergestellt wird, und die Versorgung des Motors in den anderen Modi unterbrochen wird.

5. Wahlschalter des Betriebsmodus eines Erdungstrennschalters nach Anspruch 4, **dadurch gekennzeichnet, dass** im offenen Verriegelungsmodus das zweite Verriegelungselement (26) die Verschiebung des Schlittens des elektrischen Geräts autorisiert.

6. Wahlschalter des Betriebsmodus eines Erdungstrennschalters nach einem der Ansprüche 1 bis 5,
**dadurch gekennzeichnet, dass** der Wahlschalter eine vierte Nocke (C6) beinhaltet, die auf ein drittes Verriegelungselement (25) wirkt, um eine Kabelzugangstür im geschlossenen Verriegelungsmodus zu entriegeln und um die Kabelzugangstür ansonsten zu verriegeln.

7. Wahlschalter des Betriebsmodus eines Erdungstrennschalters nach Anspruch 6, **dadurch gekennzeichnet, dass** er einen Bolzen (C11) beinhaltet, der den Wahlschalter im geschlossenen Verriegelungsmodus blockiert, solange die Kabelzugangstür nicht geschlossen ist.

8. Wahlschalter des Betriebsmodus eines Erdungstrennschalters nach einem der Ansprüche 1 bis 7,
**dadurch gekennzeichnet, dass** der Wahlschalter eine fünfte Nocke (C3) und eine Welle (22) zur Rückmeldung der Position der Leistungskontakte (10) beinhaltet, um den Zugang zum offenen Verriegelungsmodus und zum geschlossenen Verriegelungsmodus zu verhindern, wenn die entsprechende Position der Leistungskontakte (10) des Trennschalters nicht erreicht wird.

9. Wahlschalter des Betriebsmodus eines Erdungstrennschalters nach einem der Ansprüche 1 bis 8, **dadurch gekennzeichnet, dass** der Wahlschalter ein Blockiersystem mit Schlüssel (C10) oder Vorhängeschloss (C9) oder Spule (C4) beinhaltet, in den geschlossenen und offenen Verriegelungsmodi des Erdungstrennschalters.

10. Erdungstrennschalter, **dadurch gekennzeichnet, dass** er einen Wahlschalter des Betriebsmodus nach einem der Ansprüche 1 bis 9 beinhaltet.

## Claims

1. An operation mode selector (2) for an earthing switch disconnector (1), the earthing switch disconnector including power contacts (10) and a motor (24) to manipulate the power contacts (10),
the selector including a knob capable of taking a plurality of positions respectively corresponding to different operation modes of the earthing switch disconnector,
**characterised in that** it includes:
cams rotatably driven by the knob of the selector, the operation modes of the earthing switch disconnector including an automatic mode in which manipulating the earthing switch disconnector is performed using the motor, a manual mode in which manipulating the earthing switch disconnector is performed by an operator, and open locked and closed locked modes in which the open and closed positions of the earthing switch disconnector are respectively locked,
a first cam (C2) which drives a first rotatable locking member (27) intended to mechanically block the motor of the earthing switch disconnector when the knob of the selector is in one position of the plurality of positions corresponding to the closed locked mode,
a worm screw (240) rotatably driven by the motor (24) and a nut (241) driven by the worm screw when the motor drives the worm screw, the nut being connected to a control shaft (21) to cause the power contacts of the disconnector to move, the disconnector being installed into a cell including a detachable electrical appliance mounted to a carriage, and
a first lever (T0) driven by the nut of the worm screw, so that the first lever acts on a second locking member (26) so that it mechanically blocks the carriage of the electrical appliance in the detached position when the nut moves to the closing position of the disconnector, when the selector is in one position of the plurality of positions corresponding to the automatic mode.

2. The operation mode selector of an earthing switch disconnector according to claim 1, **characterised in that** it further includes a second cam (C1) which drives the second locking member (26) to mechanically block the carriage of the electrical appliance in the detached position, when the selector is in one position of the plurality of positions corresponding to the manual mode.

3. The operation mode selector of an earthing switch disconnector according to claim 1 or 2, including a shaft (22) for feeding back information on the actual position of the power contacts of the disconnector,
**characterised in that** it further includes a second lever (T0'), so that the information feedback shaft holds, via the second lever, the second locking member (26) which mechanically blocks the carriage of the electrical appliance in the detached position, as long as the power contacts (10) of the earthing switch disconnector are in the closed position.

4. The operation mode selector of an earthing switch disconnector according to any of claims 1 to 3,
**characterised in that** the selector includes a third cam (C5) acting on auxiliary electrical contacts (50) so as to switch on supply to the motor in the automatic mode and to switch off supply of the motor in other modes.

5. The operation mode selector of an earthing switch disconnector according to claim 4, **characterised in that**, in the open locked mode, the second locking member (26) allows movement of the carriage of the electrical appliance.

6. The operation mode selector of an earthing switch disconnector according to any of claims 1 to 5,
**characterised in that** the selector includes a fourth cam (C6) acting on a third locking member (25) to unlock an access door to the cables in the closed locked mode and otherwise to lock the access door to the cables.

7. The operation mode selector of an earthing switch disconnector according to claim 6, **characterised in that** it includes a rod (C11) which blocks the selector in the closed locked mode as long as the access door to the cables is not closed.

8. The operation mode selector of an earthing switch disconnector according to any of claims 1 to 7,
**characterised in that** the selector includes a fifth cam (C3) and a shaft (22) for feeding back information on the position of the power contacts (10), to prohibit access to the open locked mode and to the closed locked mode if the corresponding position of the power contacts (10) of the disconnector is not reached.

9. The operation mode selector of an earthing switch disconnector according to any of claims 1 to 8, **characterised in that** the selector includes a system for blocking by key (C10) or by padlock (C9) or by coil (C4), in the closed locked and open locked modes of the earthing switch disconnector.

10. An earthing switch disconnector **characterised in that** it includes an operation mode selector according to any of claims 1 to 9.
